# EUROPEAN PATENT APPLICATION

(11) **EP 2 278 472 A1**
(43) Date of publication of application: **26.01.2011**
(21) Application number: 10166972.9
(22) Date of filing: 23.06.2010
(51) Int. Cl.: G06F 12/12, G06F 12/08

(54) **Cache memory**

(30) Priority: 09.07.2009 JP 2009162388
(71) Applicant: FUJITSU LIMITED, Kawasaki-shi, Kanagawa 211-8588 (JP)
(72) Inventor: Yamamura, Shuji, Kawasaki-shi, Kanagawa 211-8588 (JP); Hondou, Mikio, Kawasaki-shi, Kanagawa 211-8588 (JP)
(74) Representative: Stebbing, Timothy Charles

(57) **Abstract**

A cache memory (101) for operating in accordance with a multi-way set associative system, the cache memory includes an identification information storage (203) for storing an identification information for identifying a requesting element of a memory access request corresponding to a cache block specified by a received memory access request, a replacement cache block candidate determinator for determining, upon an occurrence of a cache miss corresponding to the memory access request, a candidate of the cache block for replacing, on the basis of the identification information attached to the memory access request and the identification information stored in the identification information storage (203) corresponding to the cache block specified by the memory access request, and a replacement cache block selector for selecting a replacement cache block from the candidate.

## Description

### CACHE MEMORY

The embodiments discussed herein are related to a cache memory.

Recently, increased operating frequency of processors has resulted in relatively longer time delay in memory access, thereby affecting performance of the entire system. Many processors are provided with a high speed, small capacity memory which is called a cache memory to disguise time delay during a memory access.

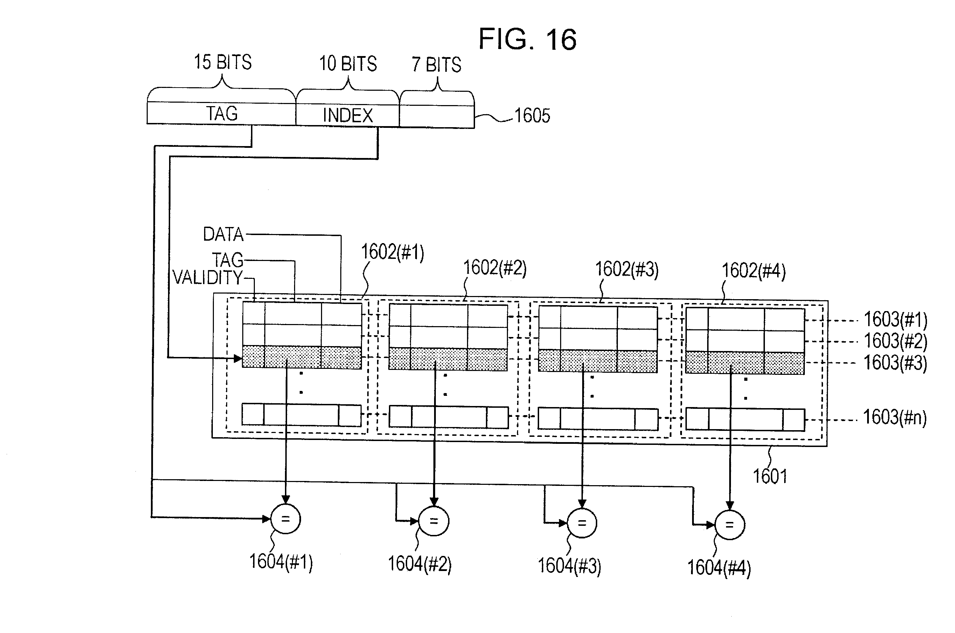

FIG. 16 schematically illustrates an operation of a set associative cache memory. A cache memory 1601 is constituted of a plurality of sets, each of which is divided into several cache ways (hereinafter, sometimes referred to as "way (s)") 1602 (#1) to 1602 (#4) for management. FIG. 16 illustrates a 4-way set associative cache memory.

Each cache way 1602 is constituted of a plurality of cache blocks (hereinafter, sometimes referred to as "blocks") 1603 (#1) to 1603 (#n). For example, n= 1024.

Each cache block 1603 is constituted of a validity flag, a tag and a data field. For example, the validity flag occupies 1 bit, the tag 15 bits and the data field 128 bytes.

Data size of the cache memory 1601 is, for example, 512 kilobytes which obtained by a calculation of (data size of cache block x number of cache indices x number of cache ways = 128 bytes x 1024 indices x four ways), with 1024 bytes being 1 kilobyte.

An address 1605 for a memory access designated by a program is constituted of 32 bits, with the lowest 7 bits occupied by an offset in the cache block, intermediate 10 bits occupied by an index and the highest 15 bits occupied by a tag.

When reading of data with respect to the address 1605 is instructed, a cache set represented by a 10-bit index in the address 1605 is selected. In response to the instruction, each cache block 1603 (#i) of a corresponding index is read out from each of the cache ways 1602 (#1) to 1602 (#4) and then input into each of comparators 1604 (#1) to 1604 (#4).

The comparators 1604 (#1) to 1604 (#4) detect matching and mismatching between the tag value in the read cache block 1603 (#i) and the tag value in the designated address 1605. It is then found that a cache hit has been made in the cache block 1603 (#i) read at the comparator 1604 in which matching between the tag values has been detected among the comparators 1604 (#1) to 1604 (#4). Then, data in a way in which matching between the tag values was detected is read out. In this manner, data may be read out at a speed higher than when read out from a main memory.

When none of the comparators 1604 detected matching between the tag values or when a validity flag represents invalidity of a corresponding cache block even if matching between the tag values is detected, no cache hit is made and data is read out from an address 1605 on the main memory.

When writing of data to the address 1605 is instructed, a cache block 1603(#i) is designated among the cache blocks 1603 (#1) to 1603 (#n) on the basis of the 10-bit index and a tag matching circuit of the address 1605 in the same manner as in the data readout.

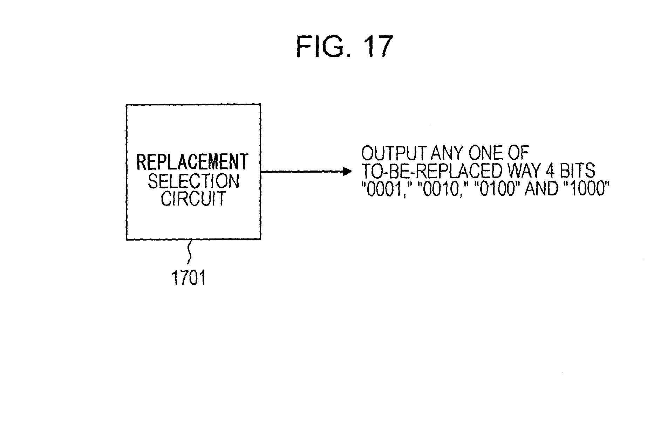

When a cache miss occurs, as illustrated in FIG. 17, a replacement way selection circuit 1701 selects one of the four cache blocks 1603 (#i) corresponding to the designated block number #i of each of the cache ways 1602 (#1) to 1602 (#4) and outputs a 4-bit selection signal. In this case, an unused way, i.e., a way of which no tag has been designated, or a way with a validity flag representing invalidity is selected among the four cache blocks 1603 (#i). When all of the ways are under use, a way determined by a predetermined algorithm is selected. The 4-bit selection signal is a data signal used for selecting one of the four ways 1602 (#1) to 1602 (#4). A way corresponding to a bit position having "1" of the 4-bit selection signal is selected. In this manner, on the basis of the selection signal output from the replacement way selection circuit 1701, data is written in a cache block 1603 corresponding to the way represented by the selection signal among the four ways 1602 (#1) to 1602 (#4) which may be selected with respect to the designated block number #i.

Examples of such a way selection algorithm include a Least Recently Used (LRU) algorithm, with which data in the least recently used cache block is selected and replaced (i.e., removed).

As is apparent from the foregoing description, when a wide range of data is to be accessed, a plurality of data pieces may have the same index value of the address 1605, resulting in cache conflict. In the set associative cache memory, however, when the indices designate the same cache set among the cache sets #1 to #n, cache blocks may be selected from a plurality of ways since all the ways are not necessarily in use. In the 4-way cache memory 1601 illustrated in FIG. 16, for example, the same index may be correlated to up to four pieces of data.

With a recent improvement in multi-process environments and virtual machine usage environments, a cache memory configured as illustrated in FIGs. 16 and 17 is often shared by a plurality of central processing units (CPUs), a plurality of core processors and a plurality of threads. A problem associated with such shared configurations is how areas of the shared cache memory may be divided and managed.

Several approaches have been proposed in order to address this problem. A first approach is called a modified LRU replacement. In this approach, a shared cache area is divided on a cache way basis and the number of cache blocks used by the process is counted for each of all the processes operated on the system. At the time of cache block replacement, if the counted number of cache blocks does not exceed a designated number, a cache block used by another process is replaced. If there is no cache block that is replaceable in the same set, a cache block is randomly selected as a candidate for replacement.

A second approach is called column caching, in which a cache area shared by processes is divided on a cache way basis. Each process holds a bit vector of a way as a candidate for replacement. When cache way replacement takes place, a candidate for replacement is selected from the way designated by the bit vector.

A third approach is to dynamically divide a shared cache memory. With this approach, a partition ID (PID) is added to the tag of the cache memory (see FIG. 16). When an access is made to a cache memory, the PID is always provided together with the address. The provided PID is compared with a PID read together with a tag designated by the address. At the time of memory of data in the cache memory, a cache way having, together with a tag, a PID the same as that provided with the address is replaced.

A fourth approach is to provide processing unit identification information and a comparator in each of cache ways constituting a set associative cache memory. At the time of cache way replacement, a number of blocks in which processing unit identification information in the set is corresponds to identification information of a unit which made an access is counted. The counted number of blocks and the maximum number of blocks are then compared to each other. If the counted number of blocks exceeds the predetermined maximum number, a way which has processing unit identification information the same as the identification information of the unit which made the access is replaced.

A fifth approach is to provide an attribute memorizing tag in each cache way. The attribute memorizing tag stores information including update time and priority regarding replacement of the way. A candidate for way replacement is selected on the basis of the attribute values.

The approaches described above, however, suffer from the following problems. Regarding the first approach, since the number of cache blocks in use may be recognized correctly for all the processes, it is difficult to mount such a cache memory in multi-process environments.

Regarding the second approach, the bit vectors may be controlled not to overlap one another in multi-process environments. When, for example, both bit vectors of a process A and a process B are '1100' in a 4-way set associative cache memory, both the processes A and B use only two ways, leaving remaining two ways unused. In order to make the best use of a shared cache memory, a process scheduling may be made by an operating system which recognizes the best combinations.

Regarding the third approach, since the PID is fixedly allocated to the tag, the tag information may be collectively rewritten for a dynamic change in a division state. Such an operation requires a high overhead. The PID may not be flexibly allocated to each process or each virtual machine in, for example, multi-process environments.

Regarding the fourth approach, since the processing unit identification information may be used only for determination on a physical processor basis, the number of ways may not be controlled on a logical program basis, i.e., on a process or a virtual machine basis. Moreover, since a comparator for the processing unit identification information is attached to each of the ways, huge hardware capacity will be required to apply this approach to a cache memory with memory capacity of not less than several megabytes. When the number of ways having the same processing unit identification information is smaller than the predetermined number, a replacement way is selected from all the ways that may be stored in the set. Thus, if a way allocated to a certain processing unit continues to be the least recently used data in the LRU control, the number of ways allocated to the certain processing unit may permanently be 1 and thus the maximum number of blocks may not be reached. Moreover, since there is no description about cache hits regarding the fourth approach, hit information may not be reflected in the LRU information.

In the fifth approach, large additional hardware capacity is required since hardware for recording update time for each way and other units, such as a timer, may be included. The fifth approach is a high overhead operation which may not be applied to multi-process environments and requires rewriting of the attribute tag to dynamically change the allocation.

As described above, the first to fifth related art approaches have difficulty in mounting a cache memory due to huge additional hardware capacity and difficulty in an efficient operation in multi-process environments and virtual machine usage environments.

Japanese Laid-open Patent Publication No. 2001-282617 discusses a method of sectioning a shared cache memory. Japanese Laid-open Patent Publication No. 6-149674 and No. 2000-90059 discuss methods of controlling a shared cache memory capable of reducing a generation of cache miss. G.E. Suh, S. Devadas, and L. Rudolph, "A new memory monitoring scheme for memory-aware scheduling and partitioning", High-Performance Computer Architecture, 2002, Proceedings, Eighth International Symposium on pages 117-128, 2-6 Feb. 2002. discusses the LRU algorism.

Accordingly, it is desirable to provide a technique of dividing and managing a cache memory.

According to an aspect of the invention, there is provided a cache memory for operating in accordance with a multi-way set associative system, the cache memory including an identification information storage for storing an identification information for identifying a requesting element of a memory access request corresponding to a cache block specified by a received memory access request, a replacement cache block candidate determinator for determining, upon an occurrence of a cache miss corresponding to the memory access request, a candidate of the cache block for replacing, on the basis of the identification information attached to the memory access request and the identification information stored in the identification information storage corresponding to the cache block specified by the memory access request, a replacement cache block selector for selecting a replacement cache block from the candidate, and an identification information updater for updating the identification information stored in the identification information storage corresponding to the cache block selected by the replacement cache block selector to the identification information attached to the memory access request upon the occurrence of the cache miss.

The advantages of the invention will be realized and attained by means of the elements and combinations particularly pointed out in the claims.

It is to be understood that both the foregoing general description and the following detailed description are exemplary and explanatory and are not restrictive of the invention, as claimed. Embodiments of the present invention will now be described with reference to the accompanying drawings, of which:

FIG. 1 illustrates a configuration of an embodiment of a cache memory;

FIG. 2 illustrates a hardware configuration of the embodiment of the cache memory;

FIG. 3 illustrates a first operation of the embodiment;

FIG. 4 illustrates a second operation of the embodiment;

FIG. 5 illustrates a third operation of the embodiment;

FIG. 6 illustrates an exemplary configuration of a computer system to which the embodiment of the cache memory is applied;

FIG. 7 illustrates a first exemplary configuration of a replacement way control circuit;

FIG. 8 illustrates an exemplary configuration of a replacement way mask generation circuit;

FIG. 9 illustrates an exemplary process structure of an operating system to which the embodiment is applied;

FIG. 10 illustrates a second exemplary configuration of the replacement way control circuit;

FIG. 11 illustrates an exemplary configuration of a hit way control circuit;

FIG. 12 illustrates a process for generating an execution binary from a source code of an application;

FIG. 13 illustrates a third exemplary configuration of the replacement way control circuit;

FIG. 14 illustrates an exemplary data structure for controlling a cache memory with respect to a virtual machine;

FIG. 15 illustrates a control operation in a cache memory with respect to a virtual machine;

FIG. 16 illustrates an exemplary configuration of a cache memory; and

FIG. 17 illustrates a replacement way selection circuit.

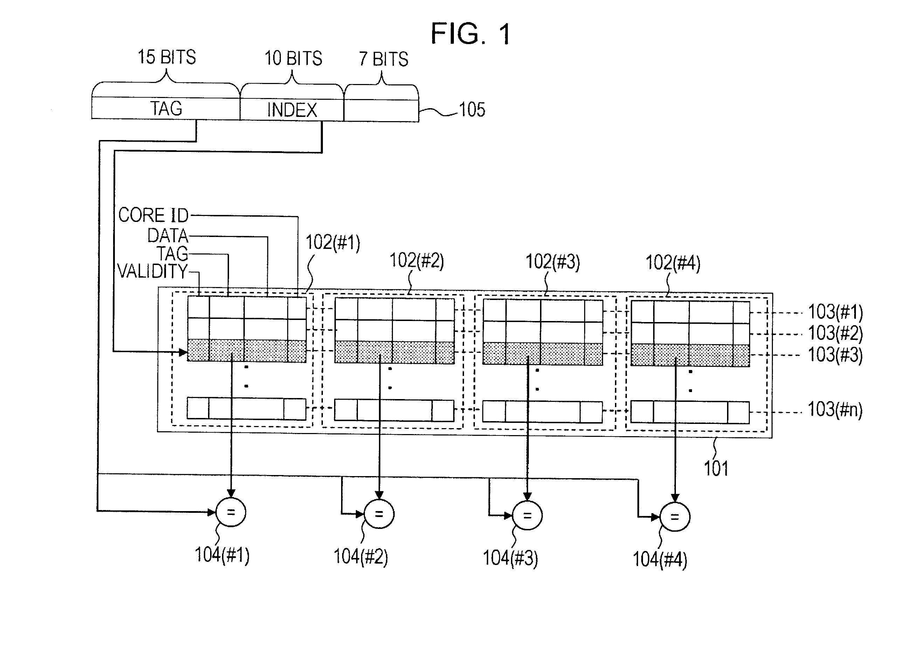

Referring now to the drawings, embodiments will be described in detail. FIG. 1 illustrates a configuration of an embodiment of a cache memory. The configuration is illustrative only is not limited to the same.

A cache memory 101 according to the present embodiment is implemented as a 4-way set associative cache memory. The cache memory 101 is divided into a plurality of cache ways 102 (#1) to 102 (#4). Each cache way 102 is includes a plurality of cache blocks 103 (#1) to 103 (#n) where n=1024, for example.

In the embodiment of FIG. 1, each cache block 103 includes a core ID (i.e., requester ID information) as well as a validity flag (1 bit), a tag (15 bits) and a data field (128 bytes). The core ID occupies 1 bit or 2 bits. If the core ID occupies 1 bit, a value of the core ID may be 0 or 1. If the core ID occupies 2 bits, the value of the core ID may be 0 to 2 or 0 to 3. The data size of the cache block is 128 bytes. The total size of the cache block including the validity flag, the tag and the core ID is (1 bit + 15 bits + 128 bytes + 1 or 2 bits).

Data size of the cache memory 101 is, for example, 512 kilobytes which obtained by calculating (data size of cache block x number of cache indices x number of cache ways = 128 bytes x 1024 indices x four ways), where 1024 bytes equals to 1 kilobyte.

An address 105 for a memory access designated by a program is constituted of 32 bits, with the lowest 7 bits occupied by an offset in the cache block, intermediate 10 bits occupied by an index and the highest 15 bits occupied by a tag.

When an access for reading data from or writing data to the address 105 is instructed, one of the block numbers of (#1) to (#n) is designated among the sets designated by a 10-bit index in the address 105.

Then, each designated cache block 103 (#i) is read from each of the cache ways 102 (#1) to 102 (#4), and is input into each of comparators 104(#1) to 104 (#4).

The comparators 104 (#1) to 104 (#4) detect matching and mismatching between the tag value in the read cache block 103 (#i) and the tag value in the designated address 105. It is then found that a cache hit has been made in the cache block 1603 (#i) read at the comparator 104 in which matching between the tag values has been detected among the comparators 104 (#1) to 104 (#4). Then, data is read from and written to the cache block 103 (#1).

When neither of the comparators 104 detected matching between the tag values or when a validity flag represents invalid even if matching between the tag values is detected, no cache hit is made and the address 105 on the main memory is accessed.

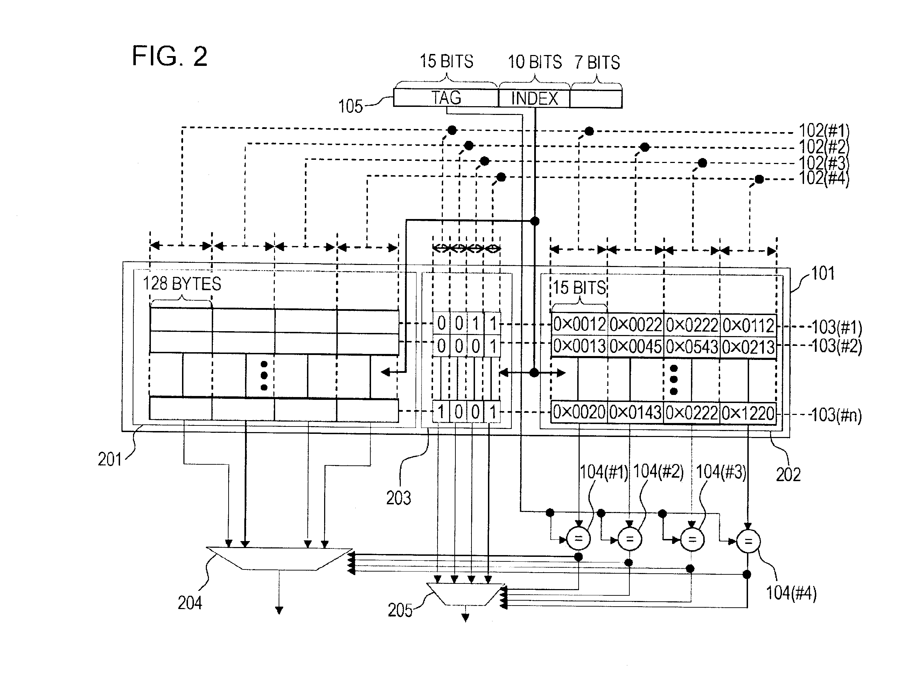

FIG. 2 illustrates a hardware configuration of the cache memory 101 corresponding to the functional configuration of FIG. 1. The data field, the tag and the core ID which constitute the cache block 103 of FIG. 1 are stored in a three divided areas: a data RAM 201, a tag RAM 202 and a core ID-RAM (an example of a ID information storage) 203 as illustrated in FIG. 2. The data RAM 201, the tag RAM 202 and the core ID-RAM 203 are each divided into four areas. Each area of the RAM corresponds to each of the cache ways 102 (#1) to 102 (#4) of FIG. 1. In the example of FIG. 2, the validity flag is substituted by the tag RAM 202 representing whether or not a tag value is stored. However, a dedicated RAM for storing validity flags may be provided. The core ID-RAM 203 may be implemented integrally with the tag RAM 202.

When a data access to the address 105 is instructed, a cache set is designated by a 10-bit index in the address 105. Then, tag values are read from each of the cache ways 102 (#1) to 102 (#4) in the tag RAM 202 and are input into the comparators 104 (#1) to 104 (#4).

The comparators 104 (#1) to 104 (#4) detect matching and mismatching between the tag value of the cache block 103 (#i) corresponding to each of the cache ways 102 (#1) to 102 (#4) read from the tag RAM 202 and the tag value stored in the designated address 105. When a cache hit is made, a 4-bit hit way signal in which only an output of the comparator 104 from which matching of the tag values was detected is 1 is output from the four comparators 104.

When a cache hit is made and a memory access request is a readout request, the following read operation will be executed. In the data RAM 201, four data values each corresponding to each of the cache ways 102 (#1) to 102 (#4) is read from a cache set 103 (#i) designated by the 10-bit index in the address 105 to a selector 204. In the core ID-RAM 203, four core ID values each corresponding to each of the cache ways 102 (#1) to 102 (#4) is read from the designated cache set 103 (#i) to a selector 205. The selectors 204 and 205 select and output a data value and a core ID of a cache block 103 (#i) of a cache way corresponding to the comparator 104 at which matching of the tag values was detected on the basis of the hit way signal from a comparator 104 at which matching of the tag values was detected.

When a cache hit is made and a memory access request is a writing request, the following writing operation will be executed with respect to the block number #i designated by a 10-bit index in the address 105 in the data RAM 201. Data and a core ID designated on the basis of the memory access request are written into a cache block 103 (#i) of a cache way designated by a hit way signal among the cache ways 102 (#1) to 102 (#4).

An operation of the thus-configured embodiment of the cache memory will be described below. The cache memory 101 according to the present embodiment may be shared by processors in multi-processor systems. The cache memory 101 according to the present embodiment may also be implemented as a cache memory which may be shared by core processors mounted on a chip in an on-chip multi-processor. The cache memory 101 according to the present embodiment may further be implemented as a cache memory which may be shared by threads in a multi-thread processor. Thus, the cache memory 101 according to the present embodiment may be applied to various computer systems which have a configuration of "requester units" for accessing and a cache memory shared by the "requester units." In the following description, the "requester unit" for accessing the cache memory 101 will be referred simply to as a core (CORE).

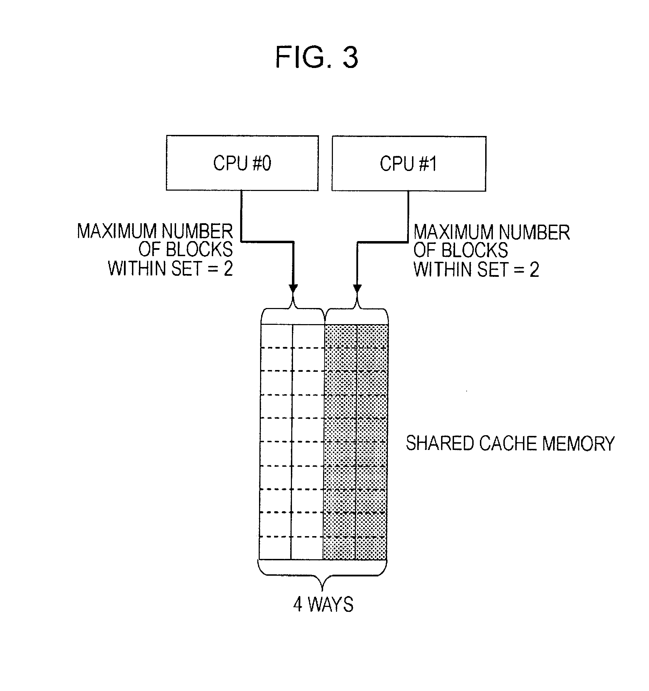

In the present embodiment, as illustrated in FIG. 3, a cache memory is allocated in a divided manner to each core on a cache way (i.e., a cache way in the set). The maximum number of blocks (i.e., a limit value of the number of ways which may be used) in the cache set which may store data may be designated for each core. The maximum number of blocks may be designated by a separately mounted dedicated register or on the basis of additional information representing the maximum number of blocks added to the memory access instruction. In the example illustrated in FIG. 3, in a 4-way set associative cache memory, the maximum number of blocks is set such that the maximum number of blocks which may be designated in a cache set is 2 with respect to each of cores i.e., a CPU #0 and a CPU #1. Then, the caching operation is executed with up to 2 ways in a set with respect to data accessed from each core.

In the embodiment of the cache memory 101 illustrated in FIGs. 1 and 2, a core ID representing a core which issued a memory access request for memorizing data is stored in the core ID-RAM 203 for each cache block 103. A bit width for storing the core ID may be the number of bits with which the number of cores which share a cache memory can be identified. For example, the core ID occupies 1 bit when the number of the core is two and 2 bits when the number of the core is up to four. Thus, an additional hardware resource (e.g., the core ID-RAM 203 or a RAM area equivalent thereto) for storing the core ID is as small as 1 or 2 bits with respect to the cache blocks 103 each having 128 bytes.

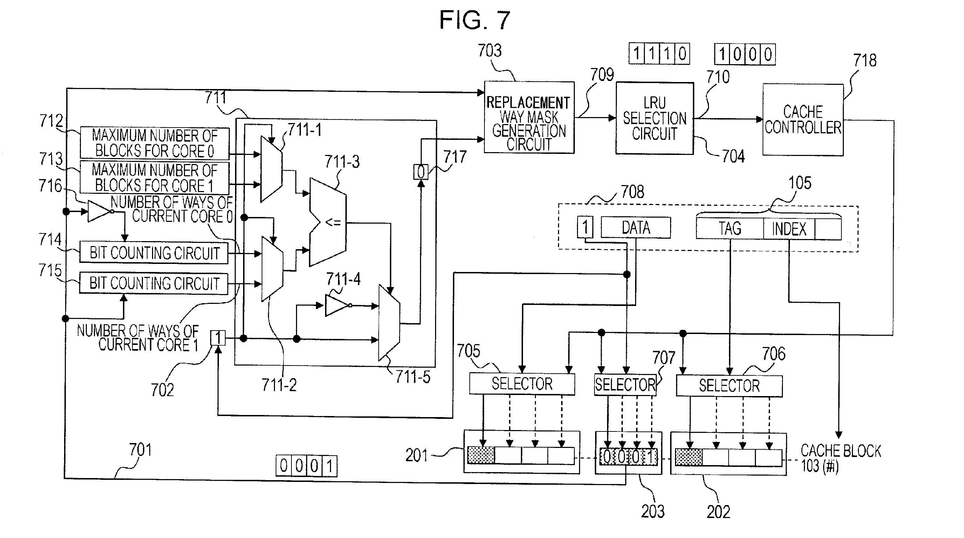

As will be described in detail with reference to FIG. 7, a control circuit which controls replacement of the cache way in the cache memory 101 selects a replacement way in the following manner when a cache miss occurs in response to a memory access.

Step 1: In a cache block 103 constituted of four ways in a cache set designated by an access address, the number of cache blocks having core IDs which are the same as that of a core ID of a requester of a memory access is acquired by, for example, counting.

Step 2: The maximum number of blocks in the set corresponding to the core ID of the requester and the number of the cache blocks acquired in Step 1 are compared to each other.

Step 3: If the number of cache blocks acquired in Step 1 is smaller than the maximum number of blocks in the set, a way having a core ID different from that of the requester is selected as a replacement way candidate. If, on the contrary, the selected number of blocks is equal to or larger than the maximum number of blocks, the way having the core ID of the requester is directly selected as a replacement way candidate directly.

Step 4: A way to be replaced, i.e., a replacement way, is selected among the replacement way candidates on the basis of a replacement policy, such as Least Recently Used (LRU).

The control circuit which controls replacement of the cache way merely replaces the core ID in the core ID-RAM 203 (FIG. 2) with the core ID of the requester when a cache hit is made in response to a memory access. That is, no comparison is made regarding the maximum number of blocks in the set.

Such a control operation has the following advantages. First, when there is data shared by other cores, these cores may continuously share the cache memory to thereby minimize capacity loss. Second, since the core ID with which a cache hit is made is recorded, the recorded core ID may be used as a history for the next access. In such history-based accesses, for example, a core corresponding to the core ID may select a replacement way on the basis of LRU among data that have been accessed before.

When a cache hit is made on a way currently allocated to a core having another core ID, the number of cache ways having core IDs same as that of the requester of the memory access may temporarily exceed the maximum number of blocks in the set. This, however, is a trivial matter because the number of blocks in the set allocated to each core ID will be stabilized gradually to each requested number of blocks by other cores accessing and replacing the blocks having core IDs exceeding the maximum number of blocks in the set.

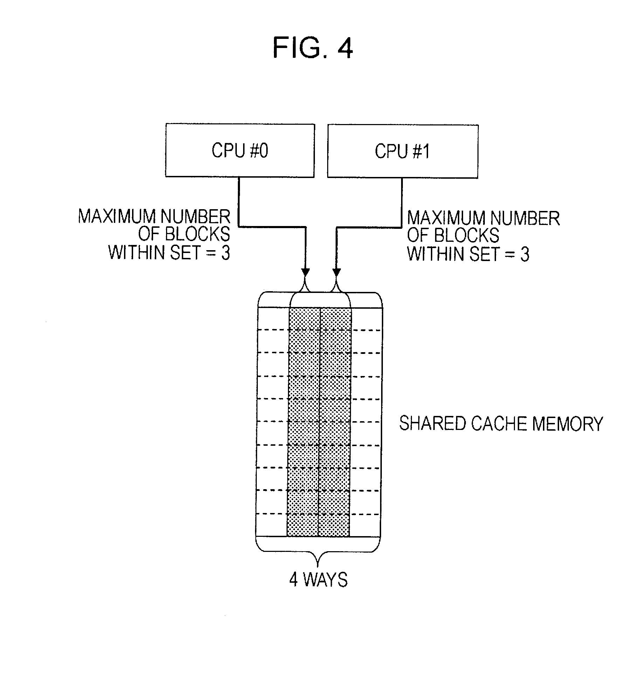

In the present embodiment, the maximum number of blocks in the set may be determined arbitrarily on a core basis. This is because, during operation of the system, cache size may be dynamically increased or decreased to approximate the maximum number of blocks in the set due to the control operation of Step 3 described above even if the maximum number of blocks in the set is determined arbitrarily. Assuming that, for example, as illustrated in FIG. 4, a 4-way cache memory is shared by two cores and the maximum number of blocks in the set of each core is set to "3," the cores conflict with each other over two ways among four ways. The system, however, may operate while keeping the maximum number of blocks of "3" due to the control operation in Step 3. With this configuration, in a multi-process environment or an environment with multiple virtual machines, each process or each virtual machine requests necessary numbers of blocks and a replacement way is determined with the requested number of blocks as the maximum. Even if the total number of blocks requested by simultaneously scheduled processes exceeds the number of ways of a mounted cache memory, there only happens conflicts over cache ways and thus no problems, such as system breakdown due to impossibility of allocation to the cache memory, will arise. In column caching, cache areas may be inefficiently used when, for example, a plurality of processes use a cache area of a particular way in an overlapped manner due to inappropriate process scheduling, leaving remaining cache areas unused. The present embodiment is free of such inefficiency.

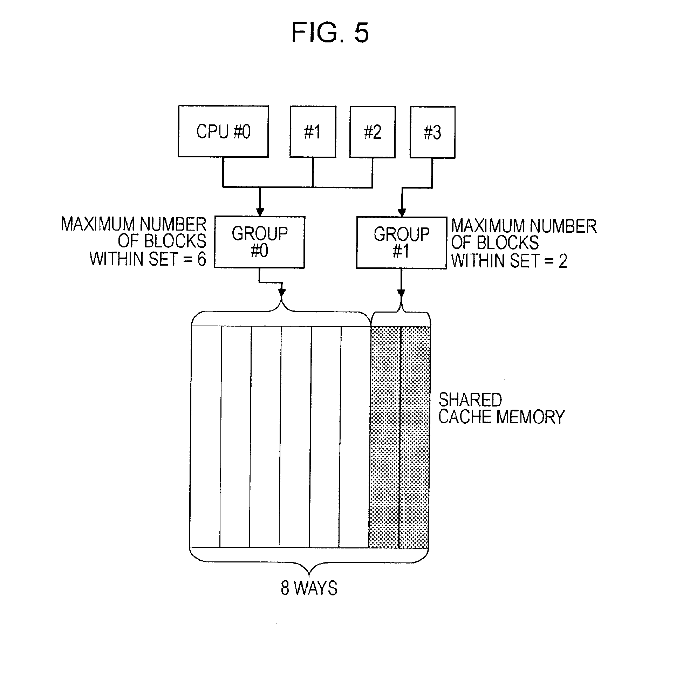

The maximum number of blocks is set for each core ID as described in the foregoing description. It is, however, also possible to group several cores and collectively set a maximum number of blocks for each group as illustrated in FIG. 5. In the example of FIG. 5, in a 8-way set associative cache memory, the maximum number of blocks "6" is set for a group #0 consisting of three cores (CPUs), CPU #0 to CPU #2. The maximum number of blocks "2" is set for a group #1 consisting only of core #3. When, for example, there is a plurality of CPUs executing the same process in parallel, the CPUs are grouped together on a process basis to efficiently use the resource for designating the maximum number of blocks since there is no need to individually designate the maximum number of blocks on a CPU basis. Thus, the program may be simplified.

As described above, the number of blocks allocated to a particular core may be restricted with a simple conditional judgment in the embodiment of the cache memory 101 having the configuration illustrated in FIGs. 1 and 2.

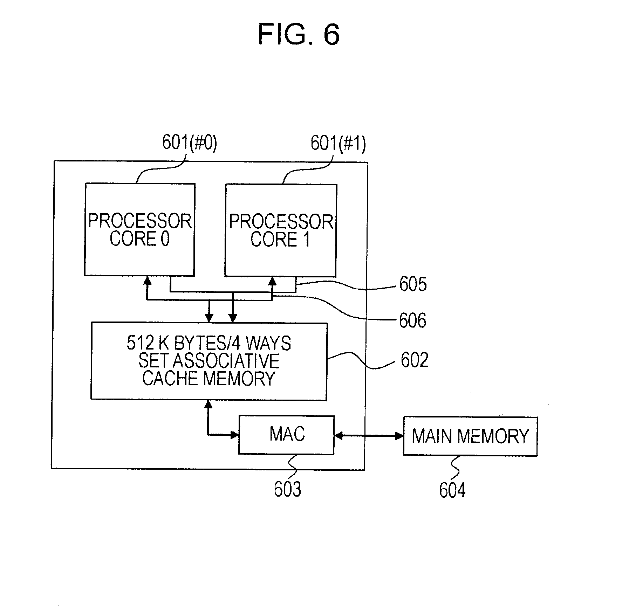

Next, a first embodiment of the way replacement control in the cache memory 101 illustrated in FIGs. 1 and 2 will be described. FIG. 6 illustrates an exemplary computer system configuration to which the cache memory 101 having the configuration illustrated in FIGs. 1 and 2 is applied.

In the exemplary configuration of FIG. 6, two processor cores 601 (601 (#0), 601 (#1)), a cache memory 602 (which corresponds to the cache memory 101 of FIG. 1) and a memory access controller (MAC) 603 are incorporated in a chip. The cache memory 602 has a 512-kilobyte, 4-way set associative configuration, and each way occupying 128 bytes. In the exemplary configuration of FIG. 6, a cache memory 602 is shared by two processor cores 601 and ways in the set of the cache memory 602 may be arbitrarily divided and allocated to each of the processor cores 601.

Each processor core 601 is connected to the cache memory 602 via a 33-bit address bus 605 and a 32-bit data bus 606. During memory access, each processor core 601 transmits a 1-bit core ID corresponding to its own core on an address bus together with a 32-bit address. When a cache miss occurs, data is acquired from the main memory 604 through the MAC 603 of the processor core 601.

FIG. 7 illustrates a first exemplary configuration of the replacement way control circuit in the cache memory 101 having the configuration illustrated in FIG. 1 or 2. The replacement way control circuit includes a replacement core ID decision circuit 711 and peripheral circuits 712 to 716 thereof, a replacement way mask generation circuit 703 (an example of a replacement way candidate determinator) and a LRU selection circuit 704 (an example of a replacement cache way selector). When a cache miss occurs, the replacement way control circuit determines a way to be replaced among data of the cache blocks 103 of four cache ways 102 (102 (#1) to 102 (#4) corresponding to the block number designated by an index.

A cache controller 718 (an example of an identification information updater) illustrated in FIG. 7 detects a cache miss by detecting a status in which no matching of tag values has been made by any of the comparators 104 illustrated in FIG. 1 or 2. When a cache miss occurs, the cache controller 718 selects an output of the LRU selection circuit 704 and validates the operation of the replacement way control circuit. When a cache hit is made, on the other hand, the cache controller 718 does not select an output of the LRU selection circuit 704 but executes an operation for the cache hit. When a memory access is made to the cache memory 101, the replacement way control circuit operates in the following manner.

In FIG. 7, a cache block 103 (#i) is first designated by an index of an address 105 in the memory access request 708. Then, a 4-bit core ID 701 corresponding to the cache ways #1 to #4 set to the designated cache block 103 (#i) is read from the core ID-RAM 203.

A 1-bit core ID 702 for controlling a replacement status of data in the cache memory 101 is added to the memory access request 708. The memory access request 708 illustrated in FIG. 7 operates on a program (software) basis, but may also be operated on a hardware basis. The core ID 702 is "0" when the memory access request 708 is issued by the processor core 601 (#0) and is "1" when the memory access request 708 is issued by the processor core 601 (#1) illustrated in FIG. 6, for example.

The core ID 702 added to the memory access request 708 is converted into a replacement core ID 717 in the replacement core ID decision circuit 711 and then input into the replacement way selectable mask generation circuit 703.

Two registers (examples of maximum number designators), the maximum number of blocks register 712 for a core 0 and the maximum number of blocks register 713 for a core 1, are connected to the replacement core ID decision circuit 711. Here, "core 0" means the processor core 601 (#0) and "core 1" means the processor core 601 (#1).

Two counting circuits (examples of counters), a bit counting circuit 714 for counting the number of blocks for the core 0 and a bit counting circuit 715 for counting the number of blocks for the core 1, are connected to the replacement core ID decision circuit 711 (an example of a comparator).

In each cache block 103, the maximum number of blocks which may be set to the processor cores 601 (#0) and 601 (#1) is set to the maximum number of blocks registers 712 for the core 0 and 713 for the core 1. These register values may be changed with instructions from the processor core 601 (see FIG. 6).

Next, the bit counting circuit 714 sequentially reads, via an inverter 716, 4-bit values of the core ID corresponding to the four ways read from the core ID-RAM 203 and counts the number of "1." Thus, the bit counting circuit 714 counts the number of the core IDs having a value of "0" among the core IDs of the four ways corresponding to a designated cache block 103 (#i) read from the core ID-RAM 203. The bit counting circuit 715 sequentially reads 4-bit values of the core ID corresponding to the four ways read from the core ID-RAM 203 and counts the number of values "1." Thus, the bit counting circuit 715 counts the number of core IDs having a value of "1" among the core IDs of the four ways corresponding to a cache block 103 (#i) read from the core ID-RAM 203.

The registers 712 and 713 and the bit counting circuits 714 and 715 each outputs, for example, a 3-bit data as the maximum number of blocks. The output 3-bit data has a value of 0 to 4, which is the maximum block.

In the replacement core ID decision circuit 711, when a core ID = "0" is designated in the memory access request 708, a selector 711-1 selects an output of the register 712 and a selector 711-2 selects an output of the bit counting circuit 714. The selected outputs are then input into a comparator 711-3. When a core ID = "1" is designated in the memory access request 708, the selector 711-1 selects an output of the register 713 and the selector 711-2 selects an output of the bit counting circuit 715. The selected outputs are then input into the comparator 711-3.

Then, the comparator 711-3 compares the maximum number of blocks corresponding to the core ID value designated by the memory access request 708 and the number of blocks having that core ID value in the designated cache block 103 (#i). Here, the maximum number of blocks is the information used for defining the upper limit of the number of ways, i.e., the number of blocks which correspond to each processor core. As described above, the core ID value is the information used for identification of the processor core 601. Thus, the comparator 711-3 compares the maximum number of blocks set to the processor core 601 which issued the memory access request 708 and the number of blocks used by the processor core 601 which corresponds to the core ID designated by the memory access request in the selected cache block 103 (#i).

In the example of FIG. 7, the value of the core ID added to the memory access request 708 is "1." Thus, the comparator 711-3 compares the maximum number of blocks set to the processor core 601 (#1) read from the register 713 and the number of blocks used by the processor core 601 (#1) in the cache block 103 (#1) read from the bit counting circuit 715.

As a result of the comparison by the comparator 711-3, if the current number of blocks is smaller than the maximum number of blocks regarding the designated core ID, the number of blocks may further be increased with respect to the designated core ID. That is, in the designated cache block 103 (#i), the number of blocks corresponding to the processor core 601 which issued the memory access request 708 may further be increased. Thus, a selector 711-5 outputs a replacement core ID 717 having a value inverted from that of the designated core ID. The selector 711-5 selects a value which is inverted by an inverter 711-4 with respect to the core ID 702 added to the memory access request 708 and then outputs the selected value as a replacement core ID 717.

If, on the other hand, the current number of blocks is equal to or larger than the maximum number of blocks regarding the designated core ID, the number of blocks corresponding to the designated core ID may not be increased any more. That is, in the designated cache block 103 (#i), the number of blocks corresponding to the processor core 601 which issued the memory access request 708 may not be increased any more. The selector 711-5 outputs a replacement core ID 717 to which the designated core ID value is set. That is, the selector 711-5 directly selects a core ID 702 added to the memory access request 708 and outputs the same as a replacement core ID 717.

In the example of FIG. 7, when the current number of blocks is smaller than the maximum number of blocks as a result of the comparison in the comparator 711-3 regarding the core ID = "1," the number of blocks of the core ID = "1" may further be increased. The selector 711-5 selects a value "0" which is inverted by an inverter 711-4 with respect to the core ID = "1" added to the memory access request 708 and then outputs the selected value as a replacement core ID 717.

The replacement core ID 717 is input into the replacement way selectable mask generation circuit 703. A 4-bit core ID 701 corresponding to the cache ways 102 (#1) to 102 (#4) read from the core ID-RAM 203 corresponding to the designated cache block 103 (#i) and a replacement core ID 717 are input into the replacement way selectable mask generation circuit 703.

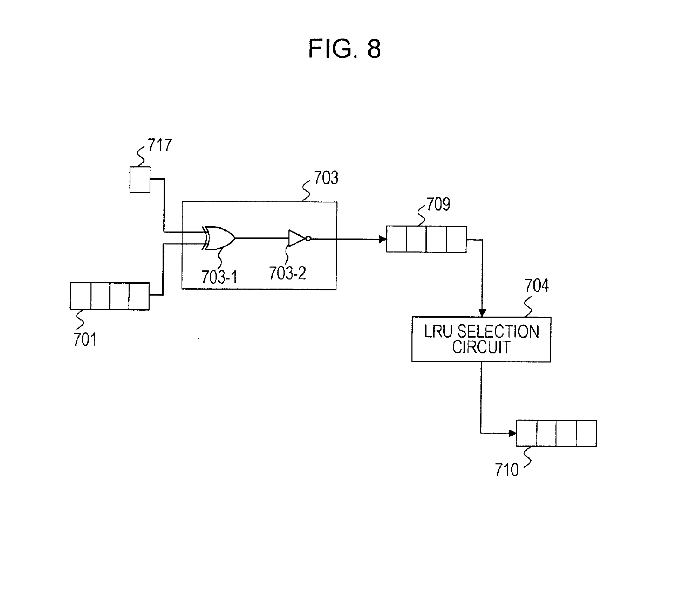

The replacement way mask generation circuit 703 includes an exclusive OR circuit (XOR) 703-1 and an inverter (INV) 703-2 as illustrated in FIG. 8. The replacement way mask generation circuit 703 executes an exclusive NOR operation between a 1-bit replacement core ID 717 output from the replacement core ID decision circuit 711 and each bit of the 4-bit core ID 701 read from the core ID-RAM 203. When a value of the replacement core ID 717 input into the replacement way mask generation circuit 703 is "0," the replacement way mask generation circuit 703 outputs a 4-bit replacement way candidate 709 which has a value "1" only at a bit position having a core ID = "0" which is the same as that of the bit value"0" of the replacement core ID 717. The replacement way candidate 709 is 4-bit information, each bit corresponding to each cache way. A cache way 102 which corresponds to the bit position with a value "1" of the replacement way candidate 709 indicates the way to be replaced on the basis of the memory access request 708.

In the example of FIG. 7, an exclusive NOR operation is executed between each bit of "0001" of the 4-bit core ID 701 read from the core ID-RAM 203 and the replacement core ID 717 of "0." Then, the replacement way mask generation circuit 703 outputs "1110" as a 4-bit replacement way candidate 709.

In the replacement way candidate 709, the LRU selection circuit 704 selects any one of ways which corresponds to the bit position with a value of "1" in accordance with a LRU algorithm. The LRU selection circuit 704 outputs a 4-bit replacement way instruction information 710 of which only a bit position corresponding to the selected way is "1."

In the example of FIG. 7, the LRU selection circuit 704 outputs "1000" as a replacement way instruction information 710 from "1110" as the replacement way candidate 709. The cache controller 718 detects a cache miss by detecting a status in which no matching of tag values are made among the comparators 104 illustrated in FIG. 1 or 2. Then, the cache controller 718 inputs replacement way instruction information 710 output from the LRU selection circuit 704. The cache controller 718 inputs the replacement way instruction information 710 into each of selectors 705, 706 and 707, which are then made to select a way corresponding to a bit position with a value of 1 among the 4-bit data of the replacement way 310.

The selector 705 outputs data corresponding to the memory access request 708 to a way corresponding to the bit position with a value of 1 among the 4-bit data of the replacement way 310 in the data RAM 201. The selector 706 outputs a tag corresponding to the memory access request 708 to a way corresponding to the bit position with a value of 1 among the 4-bit data of the replacement way 310 in the tag RAM 202. The selector 707 outputs a core ID corresponding to the memory access request 708 to a way corresponding to the bit position with a value of 1 among the 4-bit data of the replacement way 310 in the core ID-RAM 203.

An index in the memory access request 708 designates block numbers of the data RAM 201, the tag RAM 202 and the core ID-RAM 203. Then, the data, the tag and the core ID are written in the cache block 103 of the selected way of the designated block number in the data RAM 201, the tag RAM 202 and the core ID-RAM 203. Areas in which the data, the tag and the core ID are written are blacked out in FIG. 7.

When the memory access request 708 is a readout request, the data written in the data RAM 201 is the data read from a memory area corresponding to the address 105 on the main memory which is not illustrated. When the memory access request 708 is a writing request, the data written in the data RAM 201 is the data designated in the memory access request 708.

At the time of writing the data, the 4-bit core ID corresponding to the designated block number (#i) in the core ID-RAM 203 is updated from "0001" to "1001" in the example of FIG. 7. Thus, any of the cache blocks of the cache way which has corresponded to the core of the core ID = "0" is replaced and then made to correspond to the core of the core ID = "1."

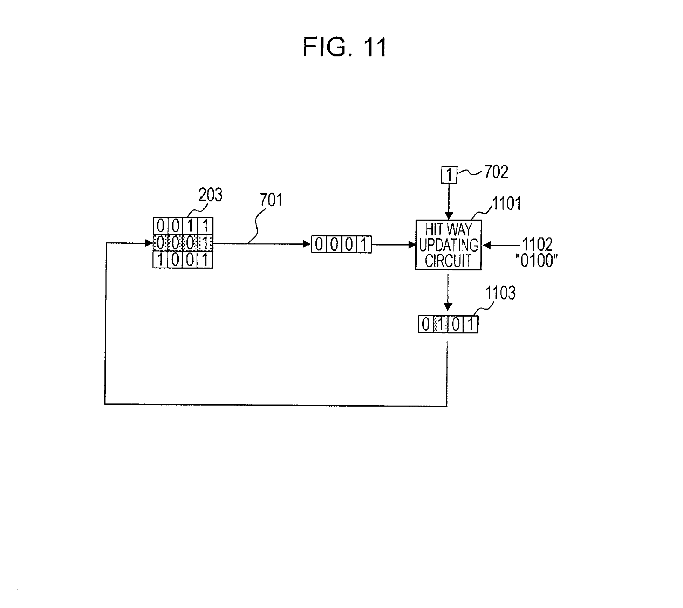

FIG. 11 illustrates a configuration of an embodiment of a hit way control circuit which controls the core ID of the cache block in which a cache hit is made in the core ID-RAM 203 when a cache hit is made in the cache memory 101 having the configuration illustrated in FIG. 1 or 2 with respect to the memory access request 708.

A hit way updating circuit 1101 illustrated in FIG. 11 is provided at, for example, the cache controller 718 illustrated in FIG. 7. A 4-bit hit way signal 1102 output from four comparators 104 illustrated in FIG. 2 is input into the hit way updating circuit 1101. In the hit way signal 1102, only a bit value corresponding to the cache way in which a cache hit is made among the cache ways 102 (#1) to 102 (#4) is 1. In the example of FIG. 11, a 4-bit value "0001" is read out from the core ID-RAM 203 as current core ID information 701.

The hit way updating circuit 1101 executes the following updating operation with respect to the 4-bit core ID 701 (see FIG. 7) corresponding to the designated cache block 103 (#i) read from the core ID-RAM 203.

That is, the core ID value corresponds to a cache way in which a bit value of hit way signal is 1 among 4-bit core ID 701 is updated to the core ID 702 attached to the memory access request 708. And the hit way updating circuit 1101 writes back the new core ID information 1103 acquired as a result of the update in location corresponding to current cache block 103 (#i) in core ID-RAM 203. In the example of FIG. 11, "0101" as the new core ID information 1103 is output to "0100" as the hit way signal 1102.

In this manner, the core ID 701 with which a cache hit is made in the current cache block 103 (#i) is updated to match the core ID 702 designated by the memory access request 708 so that no inconsistency occurs during the process.

According to the first embodiment of the replacement way control corresponding to the configurations illustrated in FIGs. 7, 8 and 11 described above, the cache ways on the cache memory 101 shared by the processor cores 601 illustrated in FIG. 6 may be divided and managed for each processor core 601.

Next, a second embodiment of the way replacement control in the cache memory 101 illustrated in FIGs. 1 and 2 will be described. In the second embodiment, when making a memory access, each processor core 601 of the computer system illustrated in FIG. 6 transmits, on an address bus, "way_limit_count" information used for designating the maximum number of blocks in the set together with a 1-bit core ID and a 32-bit address corresponding to its own core.

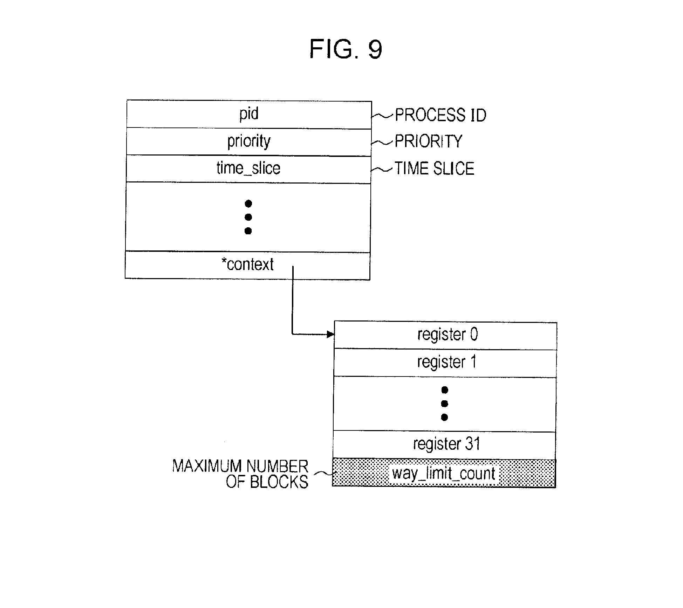

FIG. 9 illustrates an exemplary process structure of an operating system which runs on the processor core 601 according to the second embodiment of the replacement way control. The operating system which supports a multi-process environment usually manages information about each process collectively as a structure. Examples of information managed as a structure include pid (process ID) and priority (priority) and time slice (time_slice) illustrated in FIG. 9.

The structures also includes context (*context) which is a value to be saved or restored at the time of switching processes under execution. In the present embodiment, information about the maximum number of blocks in the set of the process, i.e., "way_limit_count" is also added to the structure. When the process executed on the processor core 601 is switched to another process, i.e., when a context switch is to be made, the operating system restores the information about the maximum number of blocks in the set to a process execution context before switching from a process execution context after switching together with other register values.

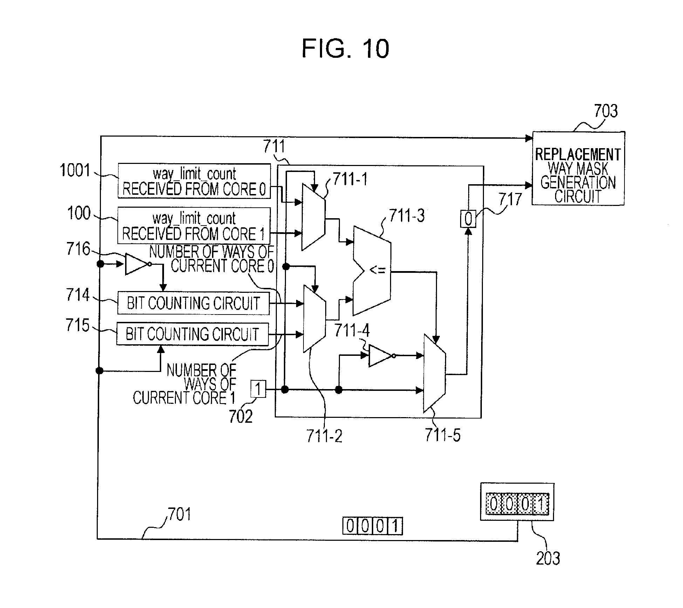

FIG. 10 illustrates an exemplary configuration of a portion of the replacement way control circuit according to the second embodiment of the replacement way control. In FIG. 10, the same functional components as those of the first exemplary configuration illustrated in FIG. 7 are denoted by the same reference numerals.

The configuration of FIG. 10 differs from that of FIG. 7 in that "way_limit_count" information designated by the address bus at the time of making a memory access from each processor core 601 is set to the maximum number of blocks register 1001 and 1002 for cores 0 and 1.

The "way_limit_count" value to be set in the maximum number of blocks register 1001 is defined in the setup of the process structure in the program executed in the processor core 601 (#0) of FIG. 6. The "way_limit_count" value to be set in the maximum number of blocks register 1002 is defined in the setup of the process structure in the program executed in the processor core 601 (#1) of FIG. 6.

As described above, in the second embodiment of the replacement way control, each time the memory access is made from each processor core 601, the maximum number of blocks in the set is set using the process structure illustrated in FIG. 9. Thus, the cache ways may be allocated in a divided manner on a process basis in multi-process environments.

Next, a third embodiment of the way replacement control in the cache memory 101 illustrated in FIGs. 1 and 2 will be described. A computer system configuration, a process structure and a way replacement control circuit configuration in the third embodiment are the same as those of the second embodiment (see FIGs. 6, 9 and 10).

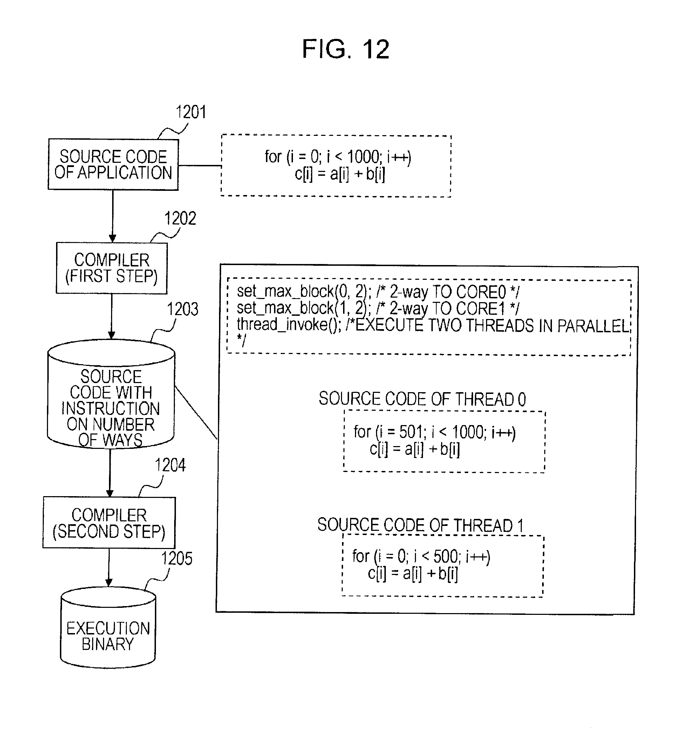

The third embodiment is an exemplary software configuration in which a compiler may issue an instruction on the maximum number of blocks in the set. FIG. 12 illustrates a process in the software configuration according to the third embodiment for generating an execution binary code from a source code of an application.

As an example of a source code 1201 of the application, a source code of a program in which requesting elements of a sequence a and a sequence b are added and the obtained value is substituted for a sequence c is illustrated in FIG. 12. In this program, an add operation is executed with respect to 1000 requesting elements of 0 to 999.

In the first step (1202 of FIG. 12), a compiler analyzes the source code of this program and makes threads by dividing the source code such that the program may be executed in parallel in two processor cores (1203 of FIG. 12). At the same time of the threading, a code used for setting the number of cache blocks to be allocated to each thread is added to the source code ("set_max_block()" in 1203 of FIG. 12). In this manner, shared cache way may be uniformly allocated to each thread.

In the second step (1204 of FIG. 12), the compiler generates, as execution binaries 1205, a first execution binary code executable in the processor core 601 (#0) and a second execution binary code executable in the processor core 601 (#1) based on the source code 1203.

When these execution binaries are executed in each processor core 601 illustrated in FIG. 6, two shared cache ways are allocated to each thread (i.e., each processor core 601) upon starting the execution of each execution binary. Execution of each thread is then started.

As described above, in the third embodiment of the replacement way control, the compiler allocates the cache memory 101 to each thread to optimize total performance of a computer system.

Next, a fourth embodiment of the way replacement control in the cache memory 101 illustrated in FIGs. 1 and 2 will be described. The computer system configuration according to the fourth embodiment is the same as that of the first embodiment (FIG. 6).

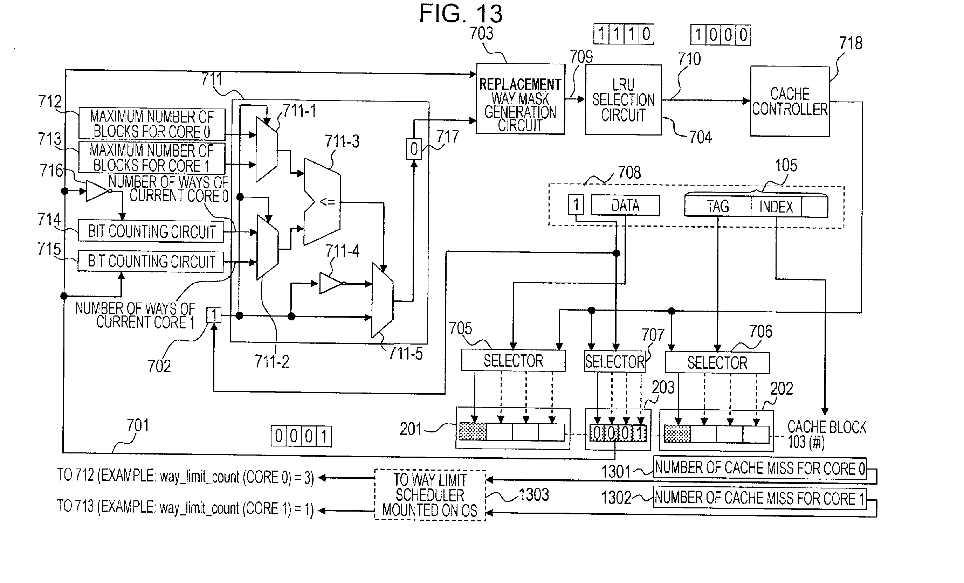

FIG. 13 illustrates an exemplary configuration of a portion of a replacement way control circuit according to the fourth embodiment of the replacement way control. In FIG. 13, the same functional components as those of the first exemplary configuration illustrated in FIG. 7 are denoted by the same reference numerals.

The configuration of FIG. 13 differs from that of FIG. 7 in that two registers 1301 and 1302 are provided to hold the number of cache misses for each processor core 601 (core 0 and core 1) in the cache memory 101.

The cache controller 718 of FIG. 13 detects a cache miss by detecting a status in which no matching of tag values has been made by any of the comparators 104 illustrated in FIG. 1 or 2 each time a memory access request 708 is issued from each processor core 601. When the value of the core ID 702 in the memory access request 708 is "0," i.e., when a memory access request 708 is issued from a #0 processor core 601, while a cache miss is detected, the cache controller 718 adds 1 to a value of the number of cache misses register 1301 for the core 0. When, on the contrary, the value of the core ID 702 in the memory access request 708 is "1," i.e., when a memory access request 708 is issued from a #1 processor core 601, while a cache miss is detected, the cache controller 718 adds 1 to a value of the number of cache misses register 1302 for the core 1.

In this manner, the number of memory access requests 708 which made cache misses is counted for each processor core 601 which issued the memory access requests 708. Although the dedicated registers 1301 and 1302 are provided in the exemplary configuration of FIG. 13, a hardware monitoring counter mounted on general processors may be used to implement these registers.

Each value of the number of cache misses registers 1301 and 1302 in the replacement way control circuit are referred to by a way limit scheduler 1303 mounted on the operating system.

The way limit scheduler 1303 refers to the values in the number of cache misses registers 1301 and 1302 at regular time intervals. The way limit scheduler 1303 then updates the maximum number of blocks of the processor core 601 (#0) allocated to the maximum number of blocks register 712 for the core 0 and the maximum number of blocks of the processor core 601 (#1) allocated to the maximum number of blocks register 713 for the core 1, based on the values of the number of cache misses registers 1301 and 1302. As a result, cache allocation to the processor core 601 (#0) and to the processor core 601 (#1) illustrated in FIG. 6 is changed. That is, the rate of occurrence of the cache miss in each processor is changed. Various scheduling policies may be applied to this control operation. For example, the way limit scheduler 1303 refers to the values in the number of cache misses registers 1301 and 1302 and, controls to increase the allocation amount to the processor core 601 (#0) when the number of cache misses for the core 0 is larger than the number of cache misses for the core 1. In particular, the way limit scheduler 1303 sets each "way_limit_count" value to be set in the maximum number of blocks registers 1001 and 1002 in the setup of the process structure corresponding to each of the processor core 601 (#0) and 601 (#1) of FIG. 6 in accordance with a predetermined rule each time predetermined conditions including that described above are satisfied.

The values of the number of cache misses registers 1301 and 1302 are cleared after a certain period of time or upon each time a thread executed by each processor core 601 is completed. Thus, in the fourth embodiment of the replacement way control, the number of times of cache misses in the cache memory 101 is dynamically counted on a core ID (i.e., processor core) basis and cache allocation is optimized on the basis of the counted result. With this configuration, the number of cache misses in the entire system may be minimized.

Next, a fifth embodiment of the way replacement control in the cache memory 101 illustrated in FIGs. 1 and 2 will be described. The computer system configuration in the fifth embodiment is the same as that of the second embodiment (FIGs. 6, 9 and 10).

The fifth embodiment is an exemplary system configuration with which a maximum number of blocks may be set to a plurality of virtual machines. In order to mount a virtual machine, hypervisor software (hereafter, referred to as "HV") is provided between the operating system and actual hardware. The HV manages virtual machine information and allocates an actual core to a virtual machine.

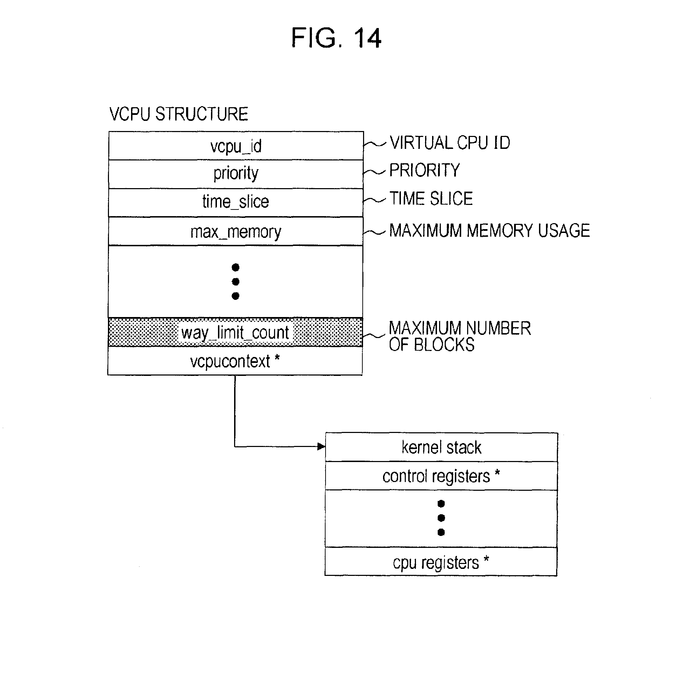

FIG. 14 illustrates an exemplary virtual machine structure (vcpu structure) managed by the HV in the fifth embodiment. The vcpu structure holds a status of a virtual machine, including an ID of the virtual machine (virtual CPUID), priority, number of executed time slices, the maximum memory usage and various register values (such as kernel stack, control registers* and cpu registers* referred to by vcpucontext*). In the fifth embodiment, "way_limit_count" is added to the vcpu structure as the maximum number of blocks.

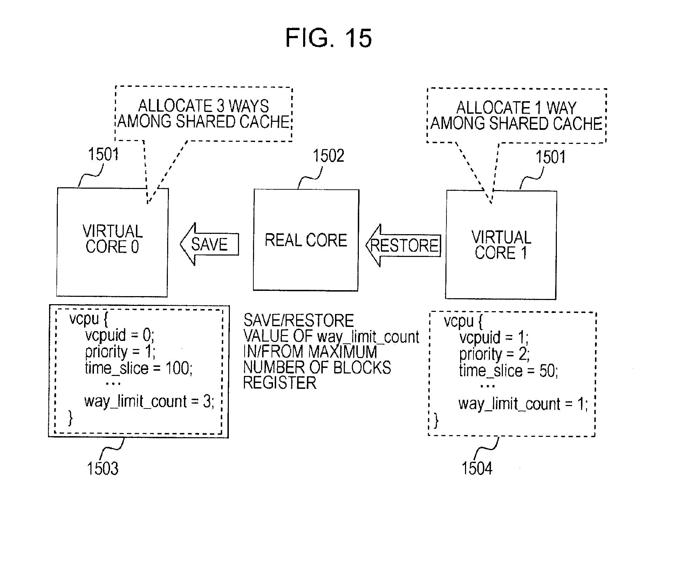

FIG. 15 illustrates a control operation in the cache memory with respect to a virtual machine, illustrating that the HV is allocating a virtual processor core (virtual core) to an actual processor core (actual core) 1502. In the example of FIG. 15, the virtual processor core 1501 of the virtual core 0 is switched to the virtual processor core 1501 of the virtual core 1. The HV makes each pieces of information set to the register and memory on the actual core 1502 to be saved in the vcpu structure 1503 which holds the status of the virtual core 0. Then, the HV makes information saved in the vcpu structure 1504 which holds the status of the virtual core 1 to be restored to the corresponding register and memory on the actual core 1502.

In the fifth embodiment, the value of "way_limit_count" is also saved and returned during restoration. At the time of restoration, the value of restored "way_limit_count" is set to the maximum number of blocks register 1001 or 1002 of FIG. 10. Thus, the maximum number of blocks may be set to the virtual machine as a switching destination. In the example of FIG. 15, information "way_limit_count" value = "3" representing that three ways will be allocated to the shared cache memory 101 at the time of saving of the virtual core 0 is saved and information "way_limit_count" value = "1" representing that one way will be allocated to the shared cache memory 101 at the time of restoration of the virtual core 1 is restored.

Thus, in the fifth embodiment of the replacement way control, the amount of use of the cache block in the cache memory 101 may be controlled for each virtual machine. As described above, according to the disclosed embodiment, the cache memory area may be arbitrarily divided on a way basis with small additional hardware cost. It is thus possible to optimize performance of the cache memory and to control conflict between processes or virtual machines over the cache memory, thereby improving effective performance of the processor.

The embodiment may be effectively applied to the following fields for the purpose of executing programs at a high speed in highly efficient processors.
- Optimization of cache performance by a programmer or a compiler
- Optimization of virtual machine performance
- Optimization of process scheduling by an operating system

The embodiment may be applied to a cache memory shared by processors in a multi-processor system and to a cache memory shared by core processors mounted on a chip in an on-chip multi-processor. Further, the embodiment may be applied to a cache memory shared by threads in a multi-thread processor.

All examples and conditional language recited herein are intended for pedagogical purposes to aid the reader in understanding the embodiment and the concepts contributed by the inventor to furthering the art, and are to be construed as being without limitation to such specifically recited examples and conditions, nor does the organization of such examples in the specification relate to a illustrating of the superiority and inferiority of the embodiment. Although the embodiments of the present invention have been described in detail, it should be understood that the various changes, substitutions, and alterations could be made hereto without departing from the scope of the invention.

## Claims

1. A cache memory for operating in accordance with a multi-way set associative system, the cache memory comprising:
an identification information storage for storing an identification information for identifying a requesting element of a memory access request corresponding to a cache block specified by a received memory access request;
a replacement cache block candidate determinator for determining, upon an occurrence of a cache miss corresponding to the memory access request, a candidate of the cache block for replacing, on the basis of the identification information attached to the memory access request and the identification information stored in the identification information storage corresponding to the cache block specified by the memory access request;
a replacement cache block selector for selecting a replacement cache block from the candidate;
and
an identification information updater for updating the identification information stored in the identification information storage corresponding to the cache block selected by the replacement cache block selector to the identification information attached to the memory access request upon the occurrence of the cache miss.

2. The cache memory according to claim 1, further comprising:
a designator for designating a maximum value of the cache block assignable to the respective requesting element as a maximum number of the cache block; and
a comparator for comparing a number of cache block having identification information identical to the identification information attached to the memory access request, and a maximum number of cache block being assigned to the respective requesting element corresponding to the identification information attached to the memory access request, upon the occurrence of a cache miss to the cache block.

3. The cache memory according to claim 2, wherein the replacement cache block candidate determinator determines, as a candidate replacement cache way, cache a cache way that stores a cache block corresponding to requester identification information other that identification information attached to the memory access request, or a cache block corresponding to identification information identical to identification information attached to the memory access request among a cache block within a cache set specified by the memory access request based on the comparison result by the comparator when a cache miss occurred.

4. The cache memory according to claim 2, wherein the designator designates the maximum value of the cache block on the basis of a context of a process being designated by an operating system that issues the memory access request to the requesting element.

5. The cache memory according to claim 2, wherein the designator designates the maximum value of the cache block on the basis of an instruction from a software that issues the memory access request.

6. The cache memory according to claim 2, wherein the designator counts a number of the cache miss for each respective requesting element, and designates the maximum value of the cache block on the basis of the number of the cache miss.

7. The cache memory according to claim 2, wherein the designator designates the maximum value of the cache block on the basis of an instruction from a virtual machine that issues the memory access request.

8. The cache memory according to claim 2, wherein the designator allows a total number of the maximum value of the cache block corresponding to the respective requesting element to become greater than the number of the cache block in the cache memory.

9. The cache memory according to any preceding claim, wherein the identification information updater updates, upon the occurrence of a cache hit corresponding to the memory access request, the identification information stored in the identification information storage of the cache block specified by the memory access request to the identification information attached to the memory access request.

10. An information processing apparatus, comprising:
a cache memory for operating in accordance with a multi-way set associative system, the cache memory including:
an identification information storage for storing an identification information for identifying a requesting element of a memory access request corresponding to a cache block specified by a received memory access request;
a replacement cache block candidate determinator for determining, upon an occurrence of a cache miss corresponding to the memory access request, a candidate of the cache block for replacing, on the basis of the identification information attached to the memory access request and the identification information stored in the identification information storage corresponding to the cache block specified by the memory access request;
a replacement cache block selector for selecting a replacement cache block from the candidate;
an identification information updater for updating the identification information stored in the identification information storage corresponding to the cache block selected by the replacement cache block selector to the identification information attached to the memory access request upon the occurrence of the cache miss; and
a plurality of processors that issues the memory access request to the requesting element, the plurality of processors being collectively set as a group;
wherein the requesting element is defined as the respective group, and
the plurality of processors attach the identification information being defined in accordance with the group including the plurality of processors when the plurality of processors issues the memory access request.

11. A cache memory for operating in accordance with a multi-way set associative system, the cache memory comprising:
an identification information storage for storing an identification information for identifying a requesting element of a memory access request corresponding to a cache block, corresponding to each cache way, specified by a received memory access request;
a replacement cache way candidate determinator for determining, upon an occurrence of a cache miss corresponding to the memory access request, a candidate of the cache way for replacing, on the basis of the identification information attached to the memory access request and the identification information stored in the identification information storage corresponding to the cache block specified by the memory access request;
a replacement cache way selector for selecting a replacement cache way from the candidate; and
an identification information updater for updating the identification information stored in the identification information storage corresponding to the cache block selected by the replacement cache way selector to the identification information attached to the memory access request upon the occurrence of the cache miss.
